# EUROPÄISCHE PATENTSCHRIFT

(11) **EP 2 269 272 B1**
(45) Veröffentlichungstag und Bekanntmachung des Hinweises auf die Patenterteilung: **21.09.2011**
(21) Anmeldenummer: 08873352.2
(22) Anmeldetag: 18.11.2008
(51) Int. Cl.: H01R 13/52, H02K 5/22

(54) **ELEKTRISCHER ANSCHLUSS FÜR EINEN ELEKTROMOTOR**
ELECTRICAL CONNECTION FOR AN ELECTRIC MOTOR
RACCORDEMENT ÉLECTRIQUE POUR UN MOTEUR ÉLECTRIQUE

(30) Priorität: 11.03.2008 DE 102008000598
(43) Veröffentlichungstag der Anmeldung: 05.01.2011
(73) Patentinhaber: Robert Bosch GmbH, 70442 Stuttgart (DE)
(72) Erfinder: BITZER, Harold, 77815 Buehl (DE)
(86) Internationale Anmeldenummer: PCT/EP2008/065704
(87) Internationale Veröffentlichungsnummer: WO 2009/112097

(56) Entgegenhaltungen:
- EP-A- 1 870 599
- DE-A1- 19 859 183
- US-A1- 2007 218 736

## Beschreibung

### Stand der Technik

Die vorliegende Erfindung betrifft einen elektrischen Anschluss für einen Elektromotor nach der Gattung des Anspruchs 1.

Es ist allgemein bekannt, bei elektrischen Anschlüssen zur Abdichtung von Leitungskabeln in Steckern sogenannte Einzeladerabdichtungen (EADs) vorzusehen. Der einzelne elektrische Leiter wird dabei durch eine im Dichtungselement vorgesehene Durchgangsöffnung hindurch geführt. Das Dichtungselement weist üblicherweise zumindest eine Radialdichtlippe auf, die in der Durchgangsöffnung zur Dichtung an einer Oberfläche des Leiters anliegt. Über außenseitig des Dichtungselements vorgesehene, weitere radiale Dichtlippen erfolgt dann eine Abdichtung zu einem das Dichtungselement bzw. elektrischen Leiter aufnehmenden Gehäuse hin. Das Dichtungselement aufnehmende Gehäuse verjüngt sich anschließend trichterförmig, so dass nur der elektrische Leiter abgedichtet im durchmesserkleineren, trichterförmigen Abschnitt zum Stecker weitergeführt ist.

Das Dichtungselement wirkt somit einerseits radial zum elektrischen Leiter als auch andererseits radial zum Gehäuse. Dies wird im Folgenden als "radial-radial" wirkende Dichtung bezeichnet. Eine derartige Dichtung ist beispielsweise aus der US 2007/0218736 A1 und der DE 198 59 183 A1 bekannt. Nachteilig bei dieser Art der Dichtung eines elektrischen Anschlusses ist dabei der relativ hohe Aufwand für das das Dichtungselement aufnehmende Gehäuse und für die Ausbildung des Trichters. Üblicherweise ist eine kostenintensive Nacharbeit des Gehäuses und des Trichters erforderlich.

Aus der EP 1870 599 A1 ist ferner bekannt, einen elektrischen Leiter von außen über eine Gehäuseöffnung in das Gehäuseinnere eines Gehäuses zu führen. Dabei wird ein hülsenförmiges Dichtungselement an der Gehäuseöffnung im Gehäuseinneren zur Abdichtung des elektrischen Leiters gegenüber der Gehäuseöffnung verwendet, wobei das hülsenförmige Dichtungselement über einen umlaufenden Bund verfügt und eine Durchgangsöffnung aufweist, die vom elektrischen Leiter durchdringt ist und in welcher eine Abdichtung des Leiters über zumindest eine in der Durchgangsöffnung am Dichtungselement ausgebildete, an einer Oberfläche des Leiters anliegende Radialdichtlippe erfolgt.

### Vorteile der Erfindung

Der erfindungsgemäße elektrische Anschluss für einen Elektromotor mit den Merkmalen des Anspruchs 1 hat demgegenüber den Vorteil, dass ein zum Gehäuse hin dichter elektrischer Anschluss für einen Elektromotor bereitgestellt wird, der einerseits zuverlässig und andererseits relativ kostengünstig herzustellen ist. Der elektrische Leiter, insbesondere in Form eines Pins, ist dazu von außen über eine Gehäuseöffnung in das Gehäuseinnere des Gehäuses geführt, wobei ein hülsenförmiges Dichtungselement an der Gehäuseöffnung im Gehäuseinneren zur Abdichtung des elektrischen Leiters gegenüber der Gehäuseöffnung vorgesehen ist. Das hülsenförmige Dichtungselement verfügt über einen umlaufenden Bund und weist eine Durchgangsöffnung auf, die vom elektrischen Leiter durchdringt ist und in welcher eine Abdichtung des Leiters über zumindest eine in der Durchgangsöffnung am Dichtungselement ausgebildete, an einer Oberfläche des Leiters anliegende Radialdichtlippe erfolgt. Erfindungsgemäß ist vorgesehen, dass eine Abdichtung zum Gehäuse hin über zumindest eine am Bund ausgebildete, an eine Innenseite des Gehäuses anliegende Axialdichtlippe erfolgt. Vorteilhafterweise kann dabei eine bisher notwendige kostenintensive mechanische Nacharbeit zur Führung und Abdichtung des elektrischen Leiters in einem trichterförmig gestalteten Teil entfallen, was die Wirtschaftlichkeit erhöht.

Weitere Vorteile und vorteilhafte Ausgestaltungen der Erfindung ergeben sich aus den Unteransprüchen und der Beschreibung.

Eine einfache Konstruktion und gute Vorspannung des Dichtungselements ergibt sich, wenn das Dichtungselement in einer separaten Hülse aufgenommen ist, die an das Gehäuse unter Vorspannung verbaut ist. Vorteilhafterweise wird die Vorspannung dabei durch Schrauben erbracht, die zum Anschrauben des Stators an das Gehäuse des Elektromotors vorgesehen sind. Als zweckmäßig hat sich erweisen, für die Schrauben Furchschrauben zu verwenden.

Ein optimaler Einbauort ist gegeben, wenn die Hülse zwischen Stator und Gehäuse des Elektromotors verbaut ist.

Eine gute Abdichtung des Dichtungselements in der Dichthülse ergibt sich, wenn das Dichtungselement zusätzlich äußere Radialdichtlippen gegenüberliegend den inneren Radialdichtlippen aufweist, die in einer Aufnahmeöffnung der Hülse dichtend anliegen.

Die Dichtfunktion ist weiter verbessert, wenn das Dichtungselement innere Axialdichtlippen gegenüberliegend den äußeren Axialdichtlippen aufweist, die in einer Aufnahmeöffnung der Hülse für den Bund vorgesehen sind.

### Zeichnung

Ein Ausführungsbeispiel der Erfindung ist in der nachfolgenden Beschreibung näher erläutert und anhand der Zeichnung weiter verdeutlicht.

Es zeigen:
- Fig. 1: ein Ausführungsbeispiel eines elektrischen Anschlusses für einen Elektromotor und
- Fig. 2: einen vergrößerten Ausschnitt des elektrischen Anschlusses aus Fig. 1.

### Ausführungsform der Erfindung

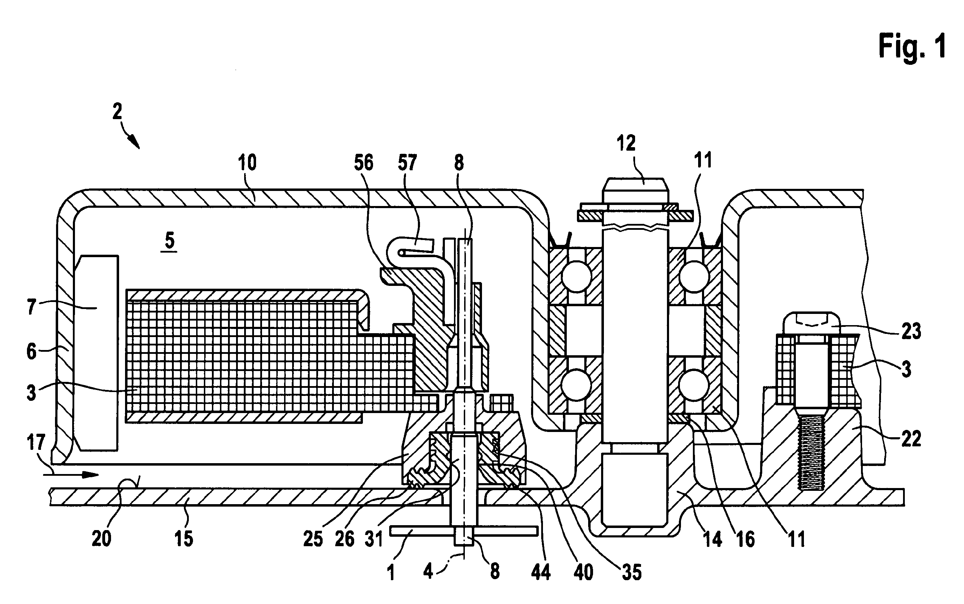

Die Fig. 1 zeigt ein erfindungsgemäßes Ausführungsbeispiel eines elektrischen Anschlusses 1 für einen Elektromotor 2. Über den Anschluss 1 erfolgt eine Kontaktierung einer Antriebseinrichtung 3 des Elektromotors 2. Bei der Antriebseinrichtung handelt es sich im Ausführungsbeispiel um den Stator 3. Der Elektromotor 2 ist beispielsweise als sogenannter Außenläufer ausgebildet, bei dem der ruhende Teil, hier der Stator 3 des Elektromotors 2, sich in einem Motorgehäuseinnern 5 befindet und von einem bewegten Teil, einem Rotor 6 bzw. Läufer, umschlossen ist. Diese Bauweise eignet sich insbesondere für Axiallüfter, wie sie zum Beispiel bei Motorkühlungsgebläsen zum Einsatz kommen. Bei dem hier vorliegenden elektronisch kommutierten Gleichstrom-Außenläufer-Elektromotor 2 weist der Rotor 5 ringförmig angeordnete Dauermagneten 7 auf. Der ruhende Stator 3 weist eine übliche Bauweise mit Blechpaketen auf und wird über einen elektrischen Leiter 8, hier in Form eines runden Pins, elektrisch kontaktiert. Der Pin 8 besteht beispielsweise aus einer Kupferlegierung und ist vorzugsweise durch Fließpressung hergestellt. Zwischen den Dauermagneten 7 und dem Stator 3 ist ein Radialspalt im Motorgehäuseinneren 5 vorgesehen.

Der den Stator 3 übergreifende Rotor 6 hat ein topfförmiges Rotorgehäuse 10. Das Rotorgehäuse 10 ist über Lagerelemente 11 an einer Welle 12 gestützt und drehbar um die Welle 12 gelagert. Zwischen dem Rotorgehäuse 10 und einem Motorgehäuse (Grundplatte) 15 ist ein Axialspalt vorgesehen, in welchem, wie durch einen Pfeil 17 angedeutet, Luft in das Motorgehäuseinnere 5 zur Belüftung strömen kann. Die Welle 12 ist in einer hülsenförmigen Wellenaufnahme 14 des Motorgehäuses 15 eingegossen, beispielsweise als Alu-Druckguss-Verbindung. An der Wellenaufnahme 14 stützen sich über eine Scheibe 16 die Lagerelemente 11 ab, die zum Beispiel als Kugellager ausgebildet sind.

Der Stator 3 ist im Motorgehäuseinneren 5 untergebracht und an Befestigungsstellen 22 am Motorgehäuse 15 befestigt, die von einer Innenseite 20 des Motorgehäuse 15 erhaben bzw. zapfenförmig ausgebildet sind. Zur Verbindung des Stators 3 an das Motorgehäuse 15 sind zum Beispiel mehrere Schrauben 23 vorgesehen, die den Stator 3 bzw. das Statorpaket an die Befestigungsstellen 22, verschrauben und dabei in die Befestigungsstellen 22 eindringen. Eine der Befestigungsstellen 22 kann von einer Dichthülse 25 gebildet sein, in welche ein hülsenförmiges bzw. hohlzylindrisches Dichtungselement 26 untergebracht ist. Die Dichthülse 25 wird zwischen dem Stator 3 und dem Motorgehäuse 15 verspannt verbaut. Hierzu sind vorzugsweise drei Schrauben 23 vorgesehen, die insbesondere als Furchschrauben bzw. als gewindefurchende Schrauben ausgebildet sind. Gegenüber dem Stator 3 ist auf einer anderen Seite des Motorgehäuses 15, im Folgenden Steuergeräteseite 28 bezeichnet, ein nicht näher dargestelltes Steuergerät für den Elektromotor 2 vorgesehen. Über die elektrischen Leiter bzw. Pins 8, beispielsweise vier Pins, wobei zwei Pins für Steuersignale und zwei Pins für die Stromversorgung vorgesehen sind, wird eine elektrische Verbindung zu nicht näher dargestellten Bauteilen des elektrischen bzw. elektronischen Steuergeräts hergestellt.

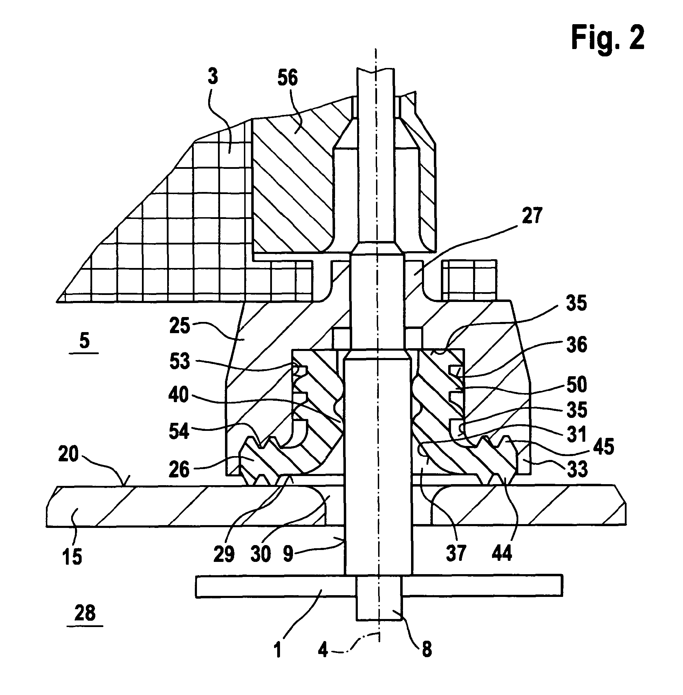

Wie die Fig. 2 näher zeigt, wird der elektrische Leiter bzw. der Pin 8 von außen her bzw. von der Steuergeräteseite 28 über eine Gehäuseöffnung 30 in das Motorgehäuseinnere 5 geführt. Der Pin 8 wird dabei durch eine im Dichtungselement 26 vorgesehene Durchgangsöffnung 31 hindurchgeführt. Die Dichthülse 25 zentriert sich dabei am Motorkontakt bzw. am Pin 8 so, dass eine gleichmäßig umlaufende Anpressung innerer Radialdichtlippen 40 an den Pin 8 erfolgt. In der Durchgangsöffnung 31 des Dichtungselements 26 erfolgt eine radiale Abdichtung des Pins 8 in der Durchgangsöffnung 31 über die zumindest eine in der Durchgangsöffnung 31 am Dichtungselement 26 ausgebildete, an einer Oberfläche 9 des Pins 8 anliegende, innere Radialdichtlippe 40. Wie dargestellt, können zum Beispiel zwei umlaufende Radialdichtlippen 40 ausgebildet sein, die voneinander axial beabstandet sind.

Zur Abdichtung des Pins 8 gegenüber der Gehäuseöffnung 30 weist das Dichtungselement 26 des Weiteren einen umlaufenden Bund 33 auf, dessen Außendurchmesser größer ist als die Gehäuseöffnung 30 und diese daher überragt. Über zumindest eine am Bund 33 ausgebildete, an der Innenseite 20 des Motorgehäuses 5 angedrückte, äußere Axialdichtlippe 44 erfolgt eine axiale Abdichtung von außen bzw. von der Steuergeräteseite 28 zum Motorgehäuseinneren 5. Die Steuergeräteseite 28 ist üblicherweise dicht abgeschlossen, im Unterschied zur Motorseite bzw. zum belüfteten Motorgehäuseinneren 5. Wie dargestellt, können am Bund 33 beispielsweise zwei konzentrisch mit unterschiedlichem Radius und gleichen Mittelpunkt verlaufende äußere Axialdichtlippen 44 vorgesehen sein, ähnlich wie bei einer Zielscheibe. Zur Erzeugung einer definierten axialen Anpressung der Axialdichtlippen 44, wird die Dichthülse 25 zwischen Statorpaket 3 und Motorgehäuse 15 eingespannt. Die Vorspannung erfolgt dabei durch Anschrauben des Statorpakets 3 mittels dreier Furchschrauben 23.

Das Dichtungselement 26 weist neben dem Bund 33 seinen Längskörper auf, so dass sich im Schnitt eine T-Form des Dichtungselements 26 ergibt. Das Dichtungselement 26 ist in eine entsprechend abgestufte Aufnahmeöffnung 35 der Dichthülse 25 nahezu vollständig eingebracht, derart, dass lediglich die Axialdichtlippen 44 von einer ringförmigen Stirnfläche 29 der Dichthülse 25 abstehen. Zur Abdichtung in der Aufnahmeöffnung 35 der Dichthülse 25 weist das Dichtungselement 26 außenseitig an seiner Mantelfläche 36 zumindest eine äußere Radialdichtlippe 50 auf. Im Ausführungsbeispiel sind zwei äußere Randdichtlippen 50 vorgesehen, die bei in der Durchgangsöffnung 31 eingeführtem Pin 8 an einer Innenfläche 53 der Aufnahmeöffnung 35 der Dichthülse 25 dichtend anliegen. In axialer Richtung sind gegenüber den äußeren Axialdichtlippen 44 noch innere Axialdichtlippen 45 vorgesehen, die an einer Ringfläche 54 in der Aufnahmeöffnung 35 der Dichthülse 25 im verspannten bzw. verbauten Zustand der Dichthülse 25 dichtend anliegen.

Die Gehäuseöffnung 30 des Motorgehäuses 15 hat vorzugsweise einen Öffnungsquerschnitt, der etwas größer dimensioniert ist als ein Öffnungsquerschnitt der Durchgangsöffnung 31 des Dichtungselements 26. Wie dargestellt, verjüngt sich die Durchgangsöffnung 31 des Dichtelements 26 trichterförmig nach innen. Die äußeren Axialdichtlippen 44 und die inneren Radialdichtlippen 40 bilden einen Dichtungsbereich 37 zur Gehäuseöffnung 30 bzw. Steuergeräteseite 28 hin. Die äußeren Axialdichtlippen 44 und inneren Radialdichtlippen 40 dichten den Pin 8 vom Motorgehäuseinneren 5 zur Steuergeräteseite 28 hin zuverlässig ab. Selbstverständlich können hierzu auch mehr oder weniger Axialdichtlippen 44 und Radialdichtlippen 40 als die in der Fig. 1 und 2 gezeigten vorgesehen sein. Die Dichtfunktion zum Pin 8 hin erfolgt einerseits radial über die inneren Radialdichtlippen 40, die radial umlaufend auf die Oberfläche 9 des Pins 8 gedrückt sind und die somit die Dichtwirkung erzielen. Andererseits stützt sich das Dichtungselement 26 selbst zur Erzeugung der erforderlichen Dichtpressung mit seinen äußeren Radialdichtlippen 50 an der Innenfläche 53 der Aufnahmeöffnung 35 der Dichthülse 25 ab.

Für die Dichtfunktion zum Motorgehäuse 15 hin, werden die an dem Dichtungselement 26 vorgesehenen, koaxial zur Gehäuseöffnung 30 des Motorgehäuses 15 bzw. koaxial zu einer Längsachse 4 des Pins 8 angeordneten, äußeren Axialdichtlippen 44 auf die Innenseite 20 des Motorgehäuses 15 gedrückt und somit die axiale Dichtwirkung über die dabei entstehende Dichtpressung erzeugt. Die Axialkraft zum Anpressen der Axialdichtlippen 44 wird dabei über die Dichthülse 25 aufgebracht, die unter Vorspannung zwischen dem Stator 3 und dem Motorgehäuse 15 verbaut ist. Wie insbesondere in Fig. 2 dargestellt, drückt der Stator 3 auf die Dichthülse 25 und hält diese damit unter Vorspannung.

Der Pin 8 ist in der Durchgangsöffnung 31 des Dichtungselements 26 mit gleichbleibendem Querschnitt ausgebildet. Der Querschnitt des Pins 8 verringert sich axial betrachtet nach dem Dichtungselement 26 bis zum Austritt aus der Dichthülse 25 an einem hülsenförmigen Bundabschluss 27 der Dichthülse 25. Außerhalb der Dichthülse 25 erfolgt eine weitere Querschnittsverringerung des Pins 8, der dann weiter in einer trichterförmig gestalteten Statoranschlussaufnahme 56 weitergeführt ist und diese durchdringt. Wie die Fig. 1 zeigt, erfolgt innerhalb der Statoranschlussaufnahme 56 in etwa endseitig des Pins 8 eine elektrische Kontaktierung mit einem hakenförmig abgebogenen Statoranschlussleiter 57 und damit mit dem Stator 3. Da in der Statoranschlussaufnahme 56 keine Dichtung mehr erforderlich ist, ist eine erhebliche Vereinfachung bei der Herstellung der trichterförmigen Statoranschlussaufnahme 56 gegeben. Die Aufnahmeöffnung 35 der Dichthülse 25 ist dreifach abgestuft ausgebildet, wobei in den zwei durchmessergrößeren Stufen das Dichtungselement 26 aufgenommen ist und in der durchmesserkleineren Stufe der Pin 8 direkt in der Aufnahmeöffnung 35 geführt ist.

Das Motorgehäuse 15 ist zum Beispiel aus Aluminium gefertigt. Das Dichtungselement 26 mit seinen Lippen 40, 44, 45 und 50 ist elastisch verformbar ausgebildet. Beispielsweise kann es sich dabei um eine Silikondichtung oder dergleichen handeln. Die Dichthülse 25 kann zum Beispiel aus Kunststoff gefertigt sein.

## Patentansprüche

1. Elektrischer Anschluss (1) für einen Elektromotor (2), der ein Gehäuse (15) aufweist, in welchem eine Antriebseinrichtung, insbesondere Stator (3), in einem Gehäuseinneren (5) untergebracht ist, wobei der elektrische Anschluss (1) umfasst einen elektrischen Leiter, insbesondere in Form eines Pins (8), zur Kontaktierung der Antriebseinrichtung, wobei der elektrische Leiter (8) von außen über eine Gehäuseöffnung (30) in das Gehäuseinnere (5) des Gehäuses (15) geführt ist, und ein hülsenförmiges Dichtungselement (26) an der Gehäuseöffnung (30) im Gehäuseinneren (5) zur Abdichtung des elektrischen Leiters (8) gegenüber der Gehäuseöffnung (30), wobei das hülsenförmige Dichtungselement (26) über einen umlaufenden Bund (33) verfügt und eine Durchgangsöffnung (31) aufweist, die vom elektrischen Leiter (8) durchdringt ist und in welcher eine Abdichtung des Leiters (8) über zumindest eine in der Durchgangsöffnung (31) am Dichtungselement (26) ausgebildete, an einer Oberfläche (9) des Leiters (8) anliegende Radialdichtlippe (40) erfolgt, **dadurch gekennzeichnet, dass** eine Abdichtung zum Gehäuse (15) hin über zumindest eine am Bund (33) ausgebildete, an eine Innenseite (20) des Gehäuses (15) anliegende Axialdichtlippe (44) erfolgt.

2. Elektrischer Anschluss nach Anspruch 1, **dadurch gekennzeichnet, dass** das Dichtungselement (26) in einer separaten Hülse (25) aufgenommen ist, die an das Gehäuse (15) unter Vorspannung verbaut ist.

3. Elektrischer Anschluss nach Anspruch 2, **dadurch gekennzeichnet, dass** die Hülse (25) zwischen Stator (3) und Gehäuse (15) des Elektromotors (2) verbaut ist.

4. Elektrischer Anschluss nach Anspruch 2 oder 3, **dadurch gekennzeichnet, dass** die Vorspannung mittels Schrauben (23) erbracht wird, die zum Anschrauben des Stators (3) an das Gehäuse (15) des Elektromotors (2) vorgesehen sind.

5. Elektrischer Anschluss nach Anspruch 4, **dadurch gekennzeichnet, dass** es sich bei den Schrauben um Furchschrauben (23) handelt.

6. Elektrischer Anschluss nach einem der vorhergehenden Ansprüche 2 bis 5, **dadurch gekennzeichnet, dass** das Dichtungselement (26) äußere Radialdichtlippen (50) gegenüberliegend den inneren Radialdichtlippen (40) aufweist, die in einer Aufnahmeöffnung (35) der Hülse (25) dichtend anliegen.

7. Elektrischer Anschluss nach einem der vorhergehenden Ansprüche 2 bis 6, **dadurch gekennzeichnet, dass** das Dichtungselement (26) innere Axialdichtlippen (45) gegenüberliegend den äußeren Axialdichtlippen (44) aufweist, die in einer Aufnahmeöffnung (35) der Hülse (25) für den Bund (33) vorgesehen sind.

## Claims

1. Electrical connection (1) for an electric motor (2) which has a housing (15) in which a drive device, in particular a stator (3), is accommodated in a housing interior (5), with the electrical connection (1) comprising: an electrical conductor, in particular in the form of a pin (8), for making contact with the drive device, with the electrical conductor (8) being routed from outside into the housing interior (5) of the housing (15) via a housing opening (30), and a sleeve-like seal element (26) at the housing opening (30) in the housing interior (5) for sealing off the electrical conductor (8) from the housing opening (30), with the sleeve-like seal element (26) having a peripheral collar (33) and having a passage opening (31) through which the electrical conductor (8) passes and in which the conductor (8) is sealed off by means of at least one radial sealing lip (40) which is formed in the passage opening (31) in the seal element (26) and bears against a surface (9) of the conductor (8), **characterized in that** sealing relative to the housing (15) is performed by means of at least one axial sealing lip (44) which is formed on the collar (33) and bears against an inner face (20) of the housing (15).

2. Electrical connection according to Claim 1, **characterized in that** the seal element (26) is accommodated in a separate sleeve (25) which is installed on the housing (15) under prestress.

3. Electrical connection according to Claim 2, **characterized in that** the sleeve (25) is installed between the stator (3) and the housing (15) of the electric motor (2).

4. Electrical connection according to Claim 2 or 3, **characterized in that** the prestress is produced by means of screws (23) which are provided for screwing the stator (3) to the housing (15) of the electric motor (2).

5. Electrical connection according to Claim 4, **characterized in that** the screws are thread-tapping screws (23).

6. Electrical connection according to one of the preceding Claims 2 to 5, **characterized in that** the seal element (26) has outer radial sealing lips (50) opposite the inner radial sealing lips (40), the said outer radial sealing lips bearing in a sealing manner against an inner surface of a receiving opening (35) in the sleeve (25).

7. Electrical connection according to one of the preceding Claims 2 to 6, **characterized in that** the seal element (26) has inner axial sealing lips (45) opposite the outer axial sealing lips (44), the said inner axial sealing lips being provided in a receiving opening (35) in the sleeve (25) for the collar (33).

## Revendications

1. Raccord électrique (1) pour un moteur électrique (2) qui présente un boîtier (15) dans lequel est monté un dispositif d'entraînement, en particulier un stator (3) à l'intérieur (5) du boîtier, le raccord électrique (1) comprenant : un conducteur électrique, en particulier sous forme de broche (8), pour le contact avec le dispositif d'entraînement, le conducteur électrique (8) étant guidé depuis l'extérieur par le biais d'une ouverture de boîtier (30) dans l'intérieur (5) du boîtier (15), et un élément d'étanchéité (26) en forme de douille au niveau de l'ouverture de boîtier (30) à l'intérieur (5) du boîtier pour sceller le conducteur électrique (8) hermétiquement par rapport à l'ouverture de boîtier (30) l'élément d'étanchéité (26) en forme de douille disposant d'un épaulement périphérique (33) et présentant une ouverture de passage (31) qui est traversée par le conducteur électrique (8) et dans laquelle est réalisé un scellage hermétique du conducteur (8) par le biais d'au moins une lèvre d'étanchéité radiale (40) réalisée dans l'ouverture de passage (31) sur l'élément d'étanchéité (26) et s'appliquant contre une surface (9) du conducteur (8), **caractérisé en ce qu'**un scellage hermétique a lieu vers le boîtier (15) par le biais d'au moins une lèvre d'étanchéité axiale (44) réalisée sur l'épaulement (33) et s'appliquant contre un côté intérieur (20) du boîtier (15).

2. Raccord électrique selon la revendication 1, **caractérisé en ce que** l'élément d'étanchéité (26) est reçu dans une douille séparée (25) qui est montée sur le boîtier (15) avec précontrainte.

3. Raccord électrique selon la revendication 2, **caractérisé en ce que** la douille (25) est montée entre le stator (3) et le boîtier (15) du moteur électrique (2).

4. Raccord électrique selon la revendication 2 ou 3, **caractérisé en ce que** la précontrainte est appliquée au moyen de vis (23) qui sont prévues pour visser le stator (3) contre le boîtier (15) du moteur électrique (2).

5. Raccord électrique selon la revendication 4, **caractérisé en ce que** les vis sont des vis autotaraudeuses (23).

6. Raccord électrique selon l'une quelconque des revendications précédentes 2 à 5, **caractérisé en ce que** l'élément d'étanchéité (26) présente des lèvres d'étanchéité radiales extérieures (50) en regard des lèvres d'étanchéité radiales intérieures (40), qui s'appliquent hermétiquement contre un côté intérieur d'une ouverture de réception (35) de la douille (25).

7. Raccord électrique selon l'une quelconque des revendications précédentes 2 à 6, **caractérisé en ce que** l'élément d'étanchéité (26) présente des lèvres d'étanchéité axiales intérieures (45) en regard des lèvres d'étanchéité axiales extérieures (44), qui sont prévues dans une ouverture de réception (35) de la douille (25) pour l'épaulement (33).
